# EUROPÄISCHE PATENTANMELDUNG

(11) **EP 3 324 207 A1**
(43) Veröffentlichungstag der Anmeldung: **23.05.2018**
(21) Anmeldenummer: 17191545.7
(22) Anmeldetag: 18.09.2017
(51) Int. Cl.: G01S 15/93, G01S 15/10, G01S 15/32, G01S 15/34

(54) **VERFAHREN ZUM BETREIBEN EINES ULTRASCHALLSYSTEMS**

(30) Priorität: 18.11.2016 DE 102016222810
(71) Anmelder: Robert Bosch GmbH, 70442 Stuttgart (DE)
(72) Erfinder: Karl, Matthias, 76275 Ettlingen (DE)

(57) **Zusammenfassung**

Die vorliegende Erfindung betrifft ein Verfahren zum Betreiben eines Ultraschallsystems (10), umfassend ein Aussenden eines Ultraschallsignals (3), welches mehrere Signalabschnitte (31, 32, 33) umfasst, wobei ein erster Signalabschnitt (31) des Ultraschallsignals (3) durchgängig eine erste Frequenz (34) aufweist und ein zweiter Signalabschnitts (32) des Ultraschallsignals (3) durchgängig eine zweite Frequenz (35) aufweist, wobei der erste Signalabschnitt (31) und der zweite Signalabschnitt (32) des Ultraschallsignals (3) in unmittelbarer zeitlicher Folge ausgesendet werden und die erste Frequenz (34) ungleich der zweiten Frequenz (35) ist und wobei der erste Signalabschnitt (31) und der zweite Signalabschnitt (32) des Ultraschallsignals (3) zueinander orthogonale Signale sind, ein Empfangen eines reflektierten Ultraschallsignals (4), und ein Auswerten des reflektierten Ultraschallsignals (4) dahingehend, ob ein reflektierter erster Signalabschnitt vorliegt, der dem ersten Signalabschnitt (31) des Ultraschallsignals (3) zugehörig ist, und ein reflektierter zweiter Signalabschnitt vorliegt, der dem zweiten Signalabschnitt (32) des Ultraschallsignals (3) zugehörig ist.

## Beschreibung

### Stand der Technik

Die vorliegende Erfindung betrifft ein Verfahren zum Betreiben eines Ultraschallsystems. Aktuell werden Ultraschallsysteme insbesondere in der Fahrzeugtechnik eingesetzt, um ein Umfeld eines Fahrzeuges zu erkennen. Dabei werden von Ultraschallsensoren unterschiedliche Pulsformen ausgesandt und deren Echos empfangen. So werden beispielsweise kurze Pulse konstanter Frequenz ausgesandt, um Objekte zu erkennen, die in größerer Entfernung gegenüber dem Ultraschallsensor liegen. Solche Kurzpulse zeichnen sich dadurch aus, dass diese eine hohe örtliche Auflösung beim Erfassen einer Fahrzeugumgebung ermöglichen. Auch ist es ein Vorteil dieser Kurzpulse, dass an dem Ultraschallsensor nur eine minimale Signalverarbeitung notwendig ist, um das Echo eines solchen Kurzpulses zu identifizieren. Durch den Einsatz von Kurzpulsen werden Reichweiten von Ultraschallsensoren von deutlich über 350 cm ermöglicht.

Kurzpulse können jedoch den Nachteil aufweisen, dass deren Echo schwer in einem Hintergrundrauschen zu erkennen ist. So werden in aktuellen Ultraschallsensoren auch oftmals sogenannte Chirps als Signalform eingesetzt. Solche Chirps weisen jedoch den Nachteil auf, dass eine Ortsauflösung eines zugehörigen Ultraschallsensors deutlich geringer ist als bei einem Kurzpuls. Auch führt die Verwendung von Chirps dazu, dass eine zugehörige Signalverarbeitung sehr aufwendig sein kann.

### Offenbarung der Erfindung

Das erfindungsgemäße Verfahren zum Betreiben eines Ultraschallsystems, umfasst ein Aussenden eines Ultraschallsignals, welches mehrere Signalabschnitte umfasst, wobei ein erster Signalabschnitt des Ultraschallsignals durchgängig eine erste Frequenz aufweist und ein zweiter Signalabschnitt des Ultraschallsignals durchgängig eine zweite Frequenz aufweist, wobei der erste Signalabschnitt und der zweite Signalabschnitt des Ultraschallsignals in zeitlicher Folge ausgesendet werden und die erste Frequenz ungleich der zweiten Frequenz ist und wobei der erste Signalabschnitt und der zweite Signalabschnitt des Ultraschallsignals zueinander orthogonale Signale sind; ein Empfangen eines reflektierten Ultraschallsignals, und ein Auswerten des reflektierten Ultraschallsignals dahingehend, ob ein reflektierter erster Signalabschnitt vorliegt, der dem ersten Signalabschnitt des Ultraschallsignals zugehörig ist, und ein reflektierter zweiter Signalabschnitt vorliegt, der dem zweiten Signalabschnitt des Ultraschallsignals zugehörig ist. Nach Sprache der vorliegenden Erfindung ist eine zeitliche Folge, insbesondere eine "unmittelbare zeitliche Folge" so zu verstehen, dass die Signalabschnitte mit einer Pause, in der kein oder nahezu kein Signal ausgesendet wird, ausgesendet werden.

Das Ultraschallsignal ist bevorzugt ein Signal, welches von einem Ultraschallsensor des Ultraschallsystems ausgesendet wird. Das Ultraschallsignal wird dabei innerhalb einer Sendephase des Ultraschallsensors gesendet. Das Ultraschallsignal ist in mehrere Signalabschnitte unterteilt. Diese Signalabschnitte umfassen den ersten Signalabschnitt und den zweiten Signalabschnitt.

Der erste Signalabschnitt und der zweite Signalabschnitt werden in unmittelbarer zeitlicher Folge ausgesendet. Das bedeutet, dass der erste Signalabschnitt des Ultraschallsignals direkt an den zweiten Signalabschnitt des Ultraschallsignals anschließt, ohne dass ein weiterer Signalabschnitt ausgesendet wird, dessen Frequenz sich von der ersten und zweiten Frequenz unterscheidet. Dies schließt jedoch nicht aus, dass zwischen dem ersten und dem zweiten Signalabschnitt bevorzugt eine Pause liegt, in der kein oder nahezu kein Signal ausgesendet wird. Eine solche Pause kann beispielsweise für ein Ausschwingen einer Membran technisch notwendig sein. Das Empfangen des reflektierten Ultraschallsignals erfolgt entweder durch den Ultraschallsensor, durch den das Ultraschallsignal ausgesandt wurde, oder erfolgt durch einen weiteren Ultraschallsensor. Bei dem Auswerten des reflektierten Ultraschallsignals wird ausgewertet, ob ein reflektierter erster Signalabschnitt vorliegt, der dem ersten Signalabschnitt zugehörig ist, und ein reflektierter zweiter Signalabschnitt vorliegt, der dem zweiten Signalabschnitt zugehörig ist. Dies erfolgt insbesondere mittels eines Optimalfilters, der auf den ersten Signalabschnitt, den zweiten Signalabschnitt oder auf das gesamte Ultraschallsignal abgestimmt ist. Ein Optimalfilter wird auch als Matched-Filter bezeichnet. Auf diese Weise wird erkannt, ob ein Echo des ausgesendeten Ultraschallsignals bzw. der zugehörigen Signalabschnitte empfangen wurde. Die beiden Signalabschnitte können dabei aufgrund ihrer Orthogonalität sehr effizient voneinander unterschieden werde. So wird insbesondere eine getrennte Signalverarbeitung für die einzelnen Signalabschnitte ermöglicht, ohne dass die Echos der Signalabschnitte einander negativ beeinflussen.

Das erfindungsgemäße Verfahren ist vorteilhaft, da ein erfindungsgemäßes Ultraschallsignal mit einem ersten und einem zweiten Signalabschnitt konstanter Frequenz eine besonders hohe Ortsauflösung ermöglicht. Gleichzeitig kann das erfindungsgemäße Ultraschallsignal sehr zuverlässig in einem Hintergrundrauschen erkannt werden. Somit können die einzelnen Signalabschnitte des Ultraschallsignals bei dem Auswerten des reflektierten Ultraschallsignals deutlich voneinander getrennt werden. Dadurch können einzelne Signalabschnitte ähnlich einem Kurzpuls ausgewertet werden und es wird eine besonders hohe Ortsauflösung des Ultraschallsystems erreicht.

Die Unteransprüche zeigen bevorzugte Weiterbildungen der Erfindung.

Es ist vorteilhaft, wenn das Verfahren ferner ein Ermitteln einer Frequenzabweichung zwischen dem ersten Signalabschnitt des Ultraschallsignals und dem reflektierten ersten Signalabschnitt und/oder zwischen dem zweiten Signalabschnitt des Ultraschallsignals und dem reflektierten zweiten Signalabschnitt umfasst. Bei dem Ermitteln der Frequenzabweichung wird eine Frequenzabweichung zwischen dem ersten Signalabschnitt des Ultraschallsignals und dem reflektierten ersten Signalabschnitt und/oder zwischen dem zweiten Signalabschnitt des Ultraschallsignals und dem reflektierten zweiten Signalabschnitt ermittelt. Das bedeutet, dass ein empfangenes Echo des Ultraschallsignals dahingehend ausgewertet wird, ob es zu einer Frequenzverschiebung, also einer Veränderung der Frequenz, gekommen ist. Ein Grad dieser Frequenzverschiebung wird als Frequenzabweichung ermittelt. Durch das Ermitteln der Frequenzabweichung wird eine Dopplerauswertung ermöglicht, wobei es ausreichend ist, einen der Signalabschnitte für die Dopplerauswertung heranzuziehen. Es ist jedoch auch vorteilhaft die Frequenzabweichung mehrerer Signalabschnitte für die Dopplerauswertung heranzuziehen. Es wird somit eine Intrapuls-Dopplerschätzung ermöglicht. Eine solche zeichnet sich durch eine besonders hohe Reaktionsgeschwindigkeit aus. Auch können für jedes ausgesendete Ultraschallsignal mehrere Dopplerabschätzungen zur Relativgeschwindigkeitsmessung erfolgen.

Ferner ist es vorteilhaft, wenn in unmittelbarer zeitlicher Folge auf das Aussenden des zweiten Signalabschnitts des Ultraschallsignals ein Aussenden eines dritten Signalabschnitts des Ultraschallsignals erfolgt, wobei der dritte Signalabschnitt des Ultraschallsignals kontinuierlich eine dritte Frequenz aufweist, die ungleich der zweiten Frequenz ist und insbesondere ebenfalls ungleich der ersten Frequenz ist. Es wird somit eine besonders spezifische Signalform des Ultraschallsignals erzeugt, deren Echo nach dem Empfangen des reflektierten Ultraschallsignals besonders zuverlässig erkannt werden kann. Auch wird ein weiterer Frequenzbereich genutzt, wodurch beispielsweise eine Störung im Bereich der ersten oder zweiten Frequenz ausgeglichen werden kann. Insbesondere ist es vorteilhaft, wenn das Ultraschallsignal noch weitere Signalabschnitte umfasst, welche weitere Frequenzen aufweisen.

Ebenfalls ist es vorteilhaft, wenn die Frequenz der Signalabschnitte des Ultraschallsignals von Signalabschnitt zu Signalabschnitt ansteigt oder von Signalabschnitt zu Signalabschnitt absinkt. Auf diese Weise kann die Signalform eines Chirps durch mehrere Signalabschnitte nachgebildet werden.

Auch ist es vorteilhaft, wenn die Frequenz der Signalabschnitte des Ultraschallsignals von Signalabschnitt zu Signalabschnitt mit steigendem oder sinkendem Grad ansteigt oder absinkt. Mit anderen Worten bedeutet dies, dass eine Änderung der Frequenz zwischen aufeinanderfolgenden Signalabschnitten im zeitlichen Verlauf des Ultraschallsignals größer oder kleiner wird. Auf diese Weise kann die Signalform eines exponentiellen Chirps nachgebildet werden.

Ebenfalls ist es vorteilhaft, wenn die Frequenz der Signalabschnitte des Ultraschallsignals von Signalabschnitt zu Signalabschnitt abwechselnd ansteigt und absinkt. Auf diese Weise kann ein besonders großer Frequenzbereich abgedeckt werden, wobei gleichzeitig eine Codierung des Ultraschallsignals erfolgt, wodurch ein Echo des Ultraschallsignals zuverlässig erkannt und von den Echos anderer Ultraschallsignale unterschieden werden kann.

Auch ist es vorteilhaft, wenn das Empfangen eines reflektierten Ultraschallsignals erfolgt, wenn das Aussenden des Ultraschallsignals abgeschlossen ist. Somit kann eine einzige Membran oder ein einzelner Ultraschallsensor zum Senden des Ultraschallsignals und Empfangen des reflektierten Ultraschallsignals genutzt werden.

Des Weiteren ist es vorteilhaft, wenn der erste Signalabschnitt und der zweite Signalabschnitt des Ultraschallsignals eine unterschiedliche zeitliche Dauer aufweisen. So weist bevorzugt ein einzelner der Signalabschnitte eine längere zeitliche Dauer auf, als die anderen Signalabschnitte, um ein besonders korrektes Ermitteln der Frequenzabweichung für diesen Signalabschnitt zu ermöglichen. Weisen die übrigen Signalabschnitte eine geringere zeitliche Dauer auf, so kann insgesamt eine kurze zeitliche Dauer des Ultraschallsignals ermöglicht werden.

Auch ist es vorteilhaft, wenn die zeitliche Dauer der Signalabschnitte des Ultraschallsignals von Signalabschnitt zu Signalabschnitt ansteigt oder abfällt. Dadurch werden Signalabschnitte unterschiedlicher zeitlicher Dauer bereitgestellt und es wird dem Ultraschallsystem ermöglicht, einen Signalabschnitt mit einer passenden zeitlichen Dauer für das Ermitteln der Frequenzabweichung oder eines Objektabstandes zu wählen.

Bevorzugt kann die Auswertung des reflektierten Ultraschallsignals mittels eines sogenannten "Matched Filters" erfolgen, dessen Aufbau und Funktion dem Fachmann grundsätzlich bekannt sind. Der Matched Filter wird dabei der Frequenz des zu erwartenden Ultraschallechos nachgeführt.

Ferner ist es vorteilhaft, wenn das Verfahren ferner umfasst: ein Aussenden eines weiteren Ultraschallsignals, welches mehrere Signalabschnitte umfasst, wobei ein erster Signalabschnitt des weiteren Ultraschallsignals durchgängig eine weitere erste Frequenz aufweist und ein weiterer zweiter Signalabschnitt des weiteren Ultraschallsignals durchgängig eine weitere zweite Frequenz aufweist, wobei der erste Signalabschnitt und der zweite Signalabschnitt des weiteren Ultraschallsignals in unmittelbarer zeitlicher Folge ausgesendet werden und die weitere erste Frequenz ungleich der weiteren zweiten Frequenz ist, wobei der erste Signalabschnitt und der zweite Signalabschnitt des weiteren Ultraschallsignals zueinander orthogonale Signale sind, und wobei die weitere erste Frequenz ungleich der ersten Frequenz ist und die weitere zweite Frequenz ungleich der zweiten Frequenz ist; und das Auswerten des reflektierten Ultraschallsignals ferner dahingehend erfolgt, ob ein reflektierter weiterer erster Signalabschnitt vorliegt, der dem ersten Signalabschnitt des weiteren Ultraschallsignals zugehörig ist, und ein reflektierter weiterer zweiter Signalabschnitt vorliegt, der dem zweiten Signalabschnitt des weiteren Ultraschallsignals zugehörig ist. Mit anderen Worten ist es also vorteilhaft, wenn bei dem Betreiben des Ultraschallsystems zeitgleich mehrere Ultraschallsignale ausgesendet werden, wobei zeitgleich jeweils Signalabschnitte ausgesandt werden, welche eine unterschiedliche Frequenz zueinander aufweisen. Auf diese Weise können mehrere Ultraschallsensoren gleichzeitig ein Ultraschallsignal aussenden, wobei bei dem Empfangen des reflektierten Ultraschallsignals erkannt werden kann, von welchem der Ultraschallsensoren das Ultraschallsignal ausgesandt wurde.

Ein Ultraschallsystem, welches dazu eingerichtet ist, das erfindungsgemäße Verfahren auszuführen, weist alle Vorteile des Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein beispielhaftes Ultraschallsystem, welches dazu eingerichtet ist, das erfindungsgemäße Verfahren auszuführen,
- Figur 2: eine grafische Darstellung eines beispielhaften Ultraschallsignals gemäß einer Ausführungsform der Erfindung, und
- Figur 3: eine grafische Darstellung eines weiteren beispielhaften Ultraschallsignals gemäß einer Ausführungsform der Erfindung.

### Ausführungsformen der Erfindung

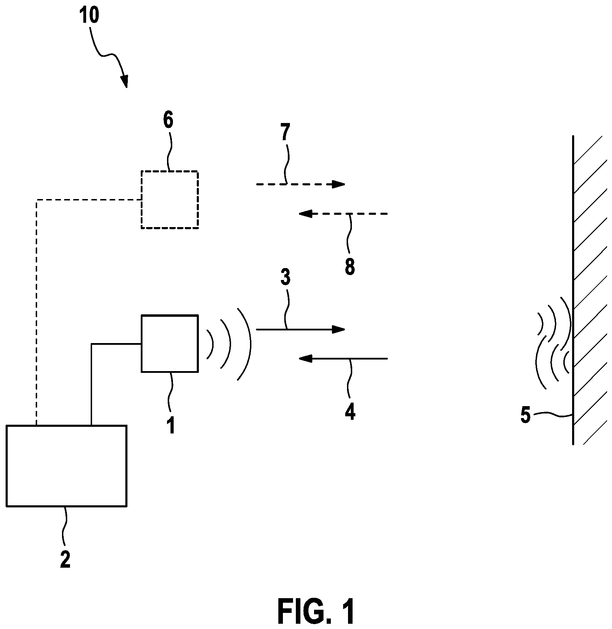

Figur 1 zeigt ein Ultraschallsystem 10, welches dazu eingerichtet ist, das erfindungsgemäße Verfahren auszuführen. Das Ultraschallsystem 10 umfasst einen ersten Ultraschallsensor 1 sowie eine Steuereinheit 2. Der erste Ultraschallsensor 1 umfasst eine Membran, wobei die Membran durch ein von der Steuereinheit 2 erzeugtes elektrisches Signal zu einer Schwingung angeregt werden kann. Wird die Membran zu einer Schwingung angeregt, so wird von dem ersten Ultraschallsensor 1 ein Ultraschallsignal 3 ausgesandt. Der erste Ultraschallsensor wird wechselweise in einer Sendephase und in einer Empfangsphase betrieben. In der Sendephase wird von dem ersten Ultraschallsensor 1 das Ultraschallsignal 3 ausgesandt, wobei pro Sendephase jeweils ein Ultraschallsignal ausgesandt wird. In der Empfangsphase wird ein reflektiertes Ultraschallsignal 4 von dem ersten Ultraschallsensor 1 empfangen. Dabei wird die Membran des ersten Ultraschallsensors 1 von eingehenden Schallsignalen zu einer Schwingung angeregt und der erste Ultraschallsensor 1 setzt diese in ein elektrisches Signal um, welches an die Steuereinheit 2 zur Auswertung weitergeleitet wird. Es wird somit von dem ersten Ultraschallsensor 1 das Ultraschallsignal 3 ausgesandt. Ist ein Objekt 5 in dem Umfeld des ersten Ultraschallsensors 1 vorhanden, so wird das Ultraschallsignal 3 zurückgeworfen und als reflektiertes Ultraschallsignal 4 von dem ersten Ultraschallsensor 3 empfangen.

Gemäß einer Ausführungsform der Erfindung erfolgt das Aussenden des Ultraschallsignals 3 mittels des ersten Ultraschallsensors 1. Das Ultraschallsignal 3 umfasst dabei einen ersten Signalabschnitt 31, einen zweiten Signalabschnitt 32 und einen dritten Signalabschnitt 33. Dabei wird in zeitlicher Abfolge zunächst der erste Signalabschnitt 31, dann der zweite Signalabschnitt 32 und zuletzt der dritte Signalabschnitt 33 ausgesandt.

Der zweite Signalabschnitt 32 des Ultraschallsignals 3 wird in unmittelbarer zeitlicher Folge auf den ersten Signalabschnitt 31 des Ultraschallsignals 3 ausgesandt. In unmittelbarer zeitlicher Folge bedeutet, dass kein anderes Signal zwischen dem ersten Signalabschnitt 31 und dem zweiten Signalabschnitt 32 des Ultraschallsignals 3 ausgesandt wird. Dies schließt jedoch nicht aus, dass zwischen dem ersten Signalabschnitt 31 und dem zweiten Signalabschnitt 32 des Ultraschallsignals 3 kurzzeitig kein akustisches Signal ausgesandt wird. So kann zwischen dem ersten Signalabschnitt 31 und dem zweiten Signalabschnitt 32 des Ultraschallsignals 3 beispielsweise eine kurze Pause liegen, welche es ermöglicht, dass die Membran des ersten Ultraschallsensors 1 zwischen den Signalabschnitten 31, 32, 33 des Ultraschallsignals 3 ausschwingen kann. Somit wird sichergestellt, dass eine Frequenz des zweiten Signalabschnittes 32 des Ultraschallsignals 3 nicht durch ein Nachschwingen der Membran aufgrund der Anregung in dem ersten Signalabschnitt 31 des Ultraschallsignals 3 erfolgt.

Der dritte Signalabschnitt 33 des Ultraschallsignals 3 wird in unmittelbarer zeitlicher Folge auf den zweiten Signalabschnitt 32 des Ultraschallsignals 3 ausgesandt. In unmittelbarer zeitlicher Folge bedeutet, dass kein anderes Signal zwischen dem zweiten Signalabschnitt 32 und dem dritten Signalabschnitt 33 des Ultraschallsignals 3 ausgesandt wird. Dies schließt jedoch nicht aus, dass zwischen dem zweiten Signalabschnitt 32 und dem dritten Signalabschnitt 33 des Ultraschallsignals 3 kurzzeitig kein akustisches Signal ausgesandt wird. So kann zwischen dem zweiten Signalabschnitt 32 und dem dritten Signalabschnitt 33 des Ultraschallsignals 3 beispielsweise eine kurze Pause liegen, welche es ermöglicht, dass die Membran des ersten Ultraschallsensors 1 zwischen den Signalabschnitten 31, 32, 33 des Ultraschallsignals 3 ausschwingen kann. Somit wird sichergestellt, dass eine Frequenz des dritten Signalabschnittes 33 des Ultraschallsignals 3 nicht durch ein Nachschwingen der Membran aufgrund der Anregung in dem zweiten Signalabschnitt 32 des Ultraschallsignals 3 erfolgt.

Der erste Signalabschnitt 31 weist durchgängig eine erste Frequenz 34 auf. Der zweite Signalabschnitt 32 weist durchgängig eine zweite Frequenz 35 auf und der dritte Signalabschnitt 33 weist durchgängig eine dritte Frequenz 36 auf. Dies bedeutet, dass jeder der Signalabschnitte 31, 32, 33 über seinen zeitlichen Verlauf eine konstante Frequenz aufweist.

Der erste Signalabschnitt 31 und der zweite Signalabschnitt 32 des Ultraschallsignals 3 sind zueinander orthogonale, mit anderen Worten also vollständig unkorrelierte Signale. Dies bedeutet, dass zwischen dem ersten Signalabschnitt 31 und dem zweiten Signalabschnitt 32 des Ultraschallsignals 3 ein Phasensprung vorliegt. Ebenso sind der zweite Signalabschnitt 32 und der dritte Signalabschnitt 33 des Ultraschallsignals 3 zueinander orthogonale Signale. Zugleich ist der dritte Signalabschnitt 33 des Ultraschallsignals 3 jedoch nicht phasengleich mit dem ersten Signalabschnitt 31 des Ultraschallsignals 3.

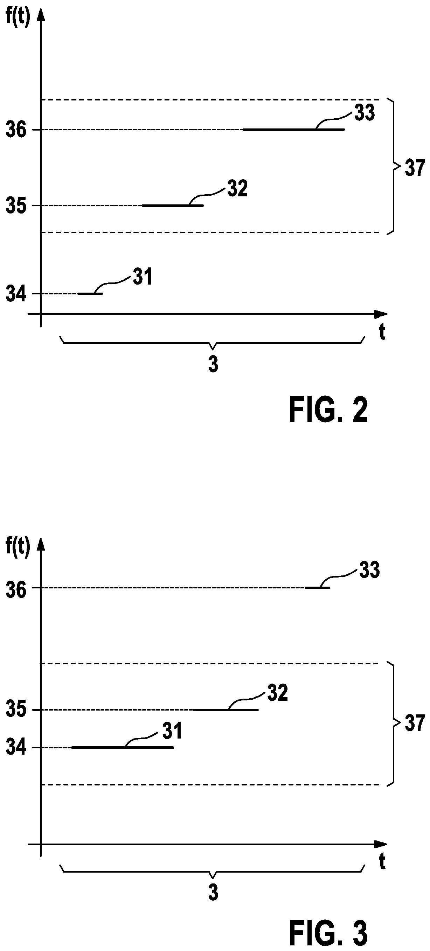

In dem in Figur 2 dargestellten beispielhaften Ultraschallsignal 3 steigt die Frequenz der Signalabschnitte 31, 32, 33 des Ultraschallsignals 3 von Signalabschnitt zu Signalabschnitt an. Dies bedeutet, dass die erste Frequenz 34 geringer ist als die zweite Frequenz 35 und die zweite Frequenz 35 geringer ist als die dritte Frequenz 36. Dabei steigt die Frequenz von Signalabschnitt zu Signalabschnitt konstant an. So erfolgt zwischen dem ersten Signalabschnitt 31 und dem zweiten Signalabschnitt 32 des Ultraschallsignals 3 ein Frequenzsprung um eine vorgegebene Frequenz, beispielsweise 2 kHz. Ebenso erfolgt zwischen dem zweiten Signalabschnitt 32 und dem dritten Signalabschnitt 33 des Ultraschallsignals 3 ein Frequenzsprung um dieselbe vorgegebene Frequenz, beispielsweise 2 kHz. Dabei weisen der erste Signalabschnitt 31 und der zweite Signalabschnitt 32 des Ultraschallsignals 3 eine unterschiedliche zeitliche Dauer auf. Ebenso weisen der dritte Signalabschnitt 33 und der zweite Signalabschnitt 32 des Ultraschallsignals 3 eine unterschiedliche zeitliche Dauer auf. So steigt in dem in Figur 2 gezeigten Beispiel die zeitliche Dauer der Signalabschnitte 31, 32, 33 des Ultraschallsignals 3 mit deren Abfolge in dem Ultraschallsignal 3 an. Die zeitliche Dauer des zweiten Signalabschnittes 32 des Ultraschallsignals 3 ist größer als die zeitliche Dauer des ersten Signalabschnittes 31 des Ultraschallsignals 3. Die zeitliche Dauer des dritten Signalabschnittes 33 des Ultraschallsignals 3 ist größer als die zeitliche Dauer des zweiten Signalabschnittes 32 des Ultraschallsignals 3. Die zeitliche Dauer steigt somit von Signalabschnitt zu Signalabschnitt an.

Alternativ zu der in Figur 2 dargestellten Signalform des Ultraschallsignals 3 kann das Ultraschallsignal 3 auch derart gestaltet sein, dass die zeitliche Dauer der Signalabschnitte 31, 32, 33 des Ultraschallsignals 3 von Signalabschnitt zu Signalabschnitt abfällt. So ist bei der in Figur 3 dargestellten Signalform des Ultraschallsignal 3 die zeitliche Dauer des zweiten Signalabschnitts 32 des Ultraschallsignals 3 größer als die zeitliche Dauer des ersten Signalabschnitts 31 des Ultraschallsignals 3 und die zeitliche Dauer des dritten Signalabschnitts 33 des Ultraschallsignals 3 größer als die zeitliche Dauer des zweiten Signalabschnitts 32 des Ultraschallsignals 3. Dabei steigt bei dem in Figur 3 gezeigten Ultraschallsignal 3 die Frequenz der Signalabschnitte 31, 32, 33 des Ultraschallsignals 3 von Signalabschnitt zu Signalabschnitt mit steigendem Grad an. So ist ein Frequenzunterschied zwischen der ersten Frequenz 34 und der zweiten Frequenz 35 geringer als ein Frequenzunterschied zwischen der zweiten Frequenz 35 und der dritten Frequenz 36.

In dieser Ausführungsform der Erfindung wird das Ultraschallsignal 3 von dem ersten Ultraschallsensor 1 in der Sendephase ausgesendet. Nach der Sendephase wird der erste Ultraschallsensor 1 in der Empfangsphase betrieben. In der Empfangsphase erfolgt das Empfangen des reflektierten Ultraschallsignals 4. Das Empfangen des reflektierten Ultraschallsignals erfolgt somit, wenn das Aussenden des Ultraschallsignals 3 abgeschlossen ist. Eine Signalform des reflektierten Ultraschallsignals 4 ist zunächst unbekannt. So kann das reflektierte Ultraschallsignal 4 ein Echo des ausgesandten Ultraschallsignals 3 umfassen, wenn ein Objekt 5 in einem Erfassungsraum des ersten Ultraschallsensors 1 befindlich ist. Auch kann das reflektierte Ultraschallsignal 4 Signale anderer Ultraschallsensoren aufweisen, die ebenfalls in der Umgebung des ersten Ultraschallsensors 1 betrieben werden. Es erfolgt daher ein Auswerten des reflektierten Ultraschallsignals 4 dahingehend, ob zumindest ein reflektierter erster Signalabschnitt vorliegt, der dem ersten Signalabschnitt 31 des Ultraschallsignals 3 zugehörig ist und ein reflektierter zweiter Signalabschnitt vorliegt, der dem zweiten Signalabschnitt 32 des Ultraschallsignals 3 zugehörig ist. Zudem wird ausgewertet, ob ein reflektierter dritter Signalabschnitt vorliegt, der dem dritten Signalabschnitt 33 des Ultraschallsignals 3 zugehörig ist. Dies erfolgt beispielsweise mittels eines Optimalfilters, der auf die Signalform des Ultraschallsignals, also auf die Abfolge des ersten bis dritten Signalabschnitts 31, 32, 33 angepasst ist. Solche zugehörige reflektierte Signalabschnitte sind Echos der zuvor ausgesandten Signalabschnitte 31, 32, 33 des Ultraschallsignals 3. In der Steuereinheit 2 erfolgt nun ein Ermitteln einer Frequenzabweichung zwischen dem ersten Signalabschnitt 31 des Ultraschallsignals 3 und dem reflektierten ersten Signalabschnitt. Mit anderen Worten wird eine Dopplerauswertung, z.B. wie nachfolgend beschrieben ausgeführt. Dies bedeutet, dass eine Frequenzverschiebung ermittelt wird. Es wird die erste Frequenz 34 mit einer Frequenz des reflektierten ersten Signalabschnittes verglichen. Sind diese Frequenzen gleich, so kann daraus gefolgert werden, dass das Objekt 5, an welchem der erste Signalabschnitt reflektiert wurde, keine relative Bewegung gegenüber dem ersten Ultraschallsensor 1 ausführt. Ist die Frequenz des reflektierten ersten Signalabschnitts größer als die erste Frequenz 34, so kann darauf geschlossen werden, dass das Objekt 5 sich auf den ersten Ultraschallsensor 1 zubewegt. Ist die Frequenz des reflektierten ersten Signalabschnitts kleiner als die erste Frequenz 34, so kann darauf geschlossen werden, dass das Objekt 5 sich von dem ersten Ultraschallsensor 1 wegbewegt.

Abhängig von einem Grad der Frequenzabweichung kann auf eine Geschwindigkeit der Relativbewegung des Objekts 5 gegenüber dem ersten Ultraschallsensor 1 geschlossen werden.

Eine entsprechende Auswertung erfolgt für den zweiten Signalabschnitt 32 des Ultraschallsignals 3 und den reflektierten zweiten Signalabschnitt. Eine entsprechende Auswertung erfolgt ebenfalls für den dritten Signalabschnitt 33 des Ultraschallsignals 3 und den reflektierten dritten Signalabschnitt. Die Relativgeschwindigkeit des Objektes 5 gegenüber dem ersten Ultraschallsensor 1 kann somit auf Basis des Ultraschallsignals dreimal ermittelt werden. Optional wird die Frequenzabweichung nur für einige oder einen einzigen der Signalabschnitte 31, 32, 33 des Ultraschallsignals 3 ermittelt. So kann etwa für sehr kurze Signalabschnitte auf das Ermitteln einer Frequenzabweichung verzichtet werden.

In alternativen Ausführungsformen kann vor dem Auswerten des reflektierten Ultraschallsignals 4 ein Filtern des in ein elektrisches Signal umgesetzten Ultraschallsignals 4 mittels eines Bandpassfilters mit einem Durchlassband 37 erfolgen, welcher lediglich die Echos ausgewählter Signalabschnitte durchlässt. Somit erfolgt eine einfache Auswahl, welcher der Signalabschnitte 31, 32, 33 als Basis für die Auswertung genutzt werden.

In alternativen Ausführungsformen der Erfindung umfasst das Ultraschallsystem 10 mehrere Ultraschallsensoren 1, 6. So ist in Figur 1 beispielhaft ein zweiter Ultraschallsensor 6 gezeigt, der dazu geeignet ist, ein weiteres Ultraschallsignal 7 auszusenden und ein weiteres reflektiertes Ultraschallsignal 8 zu empfangen.

Das weitere Ultraschallsignal 7 entspricht im Wesentlichen dem Ultraschallsignal 3, welches von dem ersten Ultraschallsensor 1 ausgesendet wird. Das bedeutet, dass das weitere Ultraschallsignal 7 ebenfalls mehrere Signalabschnitte umfasst. Dabei weist ein erster Signalabschnitt des weiteren Ultraschallsignals 7 durchgängig eine weitere erste Frequenz auf und ein weiteren zweiter Signalabschnitts des weiteren Ultraschallsignals 7 weist durchgängig eine weitere zweite Frequenz auf. Der erste Signalabschnitt und der zweite Signalabschnitt des weiteren Ultraschallsignals 7 werden in unmittelbarer zeitlicher Folge ausgesendet und die weitere erste Frequenz ist ungleich der weiteren zweiten Frequenz. Der erste Signalabschnitt und der zweite Signalabschnitt des weiteren Ultraschallsignals 7 sind zueinander orthogonale Signale.

Das von dem zweiten Ultraschallsensor 6 ausgesandte weitere Ultraschallsignal 7 ist jedoch nicht identisch zu dem von dem ersten Ultraschallsensor 1 ausgesandten Ultraschallsignal 3, da die weitere erste Frequenz ungleich der ersten Frequenz ist und die weitere zweite Frequenz ungleich der zweiten Frequenz ist. Das bedeutet mit anderen Worten, dass das von dem zweiten Ultraschallsensor 6 ausgesandte weitere Ultraschallsignal 7 eine andere Frequenzfolge aufweist als das von dem ersten Ultraschallsensor 1 ausgesandte Ultraschallsignal 3.

In einem solchen Ultraschallsystem 10 ist es besonders vorteilhaft, wenn beide der Ultraschallsensoren 1, 6 dazu eingerichtet sind, das reflektierte Ultraschallsignal dahingehend auszuwerten, ob reflektierte Signalabschnitte des jeweils anderen Ultraschallsensors vorliegen. Dazu sind insbesondere die Sendephasen und die Empfangsphasen der Ultraschallsensoren 1, 6 synchronisiert. Die Signalabschnitte der Ultraschallsignale 3, 7 der Ultraschallsensoren 1, 6 sind bevorzugt so gewählt, dass die beiden Ultraschallsensoren 1, 6 zum gleichen Zeitpunkt jeweils unterschiedliche Frequenzen aufweisen. So wird von den beiden Ultraschallsensoren 1, 6 niemals gleichzeitig ein Ultraschallsignal mit identischer Frequenz ausgesendet. Auf diese Weise kann bei dem Auswerten des reflektierten Ultraschallsignals erkannt werden, von welchem der beiden Ultraschallsensoren 1, 6 ausgegangen ist.

Das Auswerten des reflektierten Ultraschallsignals 4 erfolgt ferner dahingehend, ob ein reflektierter weiterer erster Signalabschnitt vorliegt, der dem ersten Signalabschnitt des weiteren Ultraschallsignals 7 zugehörig ist, und ein reflektierter weiterer zweiter Signalabschnitt vorliegt, der dem zweiten Signalabschnitt des weiteren Ultraschallsignals 7 zugehörig ist. Dazu wird das reflektierte Ultraschallsignal 4 in ein elektrisches Signal umgesetzt und wird parallel mittels zweier Optimalfilter gefiltert, wobei ein erster Optimalfilter auf das Ultraschallsignal 3 angepasst ist und ein zweiter Optimalfilter auf das weitere Ultraschallsignal 7 angepasst ist. Das Auswerten des weiteren reflektierten Ultraschallsignals 8 erfolgt in entsprechender Weise.

Durch die zuvor beschriebenen Ausführungsformen ist es somit möglich, eine Intrapuls-Dopplerschätzung auszuführen. Diese erfolgt innerhalb einzelner Echoabschnitte konstanter Frequenz. Eine solche Intrapuls-Dopplerschätzung ist bei der Verwendung steiler Chirps nicht möglich.

Im Folgenden werden weitere besonders vorteilhafte Signalformen für das Ultraschallsignal 3 beschrieben. Bestimmte Signalformen von Ultraschallsignalen können besonders vorteilhaft bei bestimmten Situationen sein. So wird eine Signalform des Ultraschallsignals 3 durch das Ultraschallsystem 10 bevorzugt variabel gewählt. Dies kann beispielsweise abhängig von einer Fahrsituation erfolgen. So kann die Signalform des Ultraschallsignals 3 beispielweise basierend auf der Geschwindigkeit eines Fahrzeuges gewählt werden, in dem das Ultraschallsystem 10 verbaut ist.

Das Ultraschallsignal 3 kann als ein breitbandiges Ultraschallsignal gestaltet sein. Dies bedeutet, dass der Frequenzsprung zwischen den Signalabschnitten besonders groß gewählt ist. So kann der Frequenzsprung beispielsweise 2 kHz betragen. Das Ultraschallsignal könnte beispielsweise so geformt sein, dass der erste Signalabschnitt 31 eine Zeitdauer von einer Millisekunde aufweist und eine erste Frequenz von 50 kHz aufweist. Es folgt der zweite Signalabschnitt 32 mit einer zeitlichen Dauer von 0,5 Millisekunden und einer zweiten Frequenz von 52 kHz. Es schließt der dritte Signalabschnitt 33 mit einer zeitlichen Dauer von 0,5 Millisekunden und einer dritten Frequenz von 48 kHz an. Die Dopplerauswertung erfolgt insbesondere für den ersten Signalabschnitt 31. Eine solche Signalform des Ultraschallsignals 3 ist besonders geeignet für einen unbekannten Messraum und bei einer Bewegung des Ultraschallsystems 10 gegenüber seiner Umgebung. Diese Bewegung erfolgt zum Beispiel mittels einer Bewegung eines Fahrzeuges, in dem das Ultraschallsystem verbaut ist. Diese Signalform des Ultraschallsignals 3 ist besonders für mittlere und langsame Relativbewegungen des Ultraschallsystems 10 gegenüber seiner Umgebung geeignet.

Alternativ dazu können die zeitlichen Dauern des ersten bis dritten Signalabschnitts 31 bis 33 des Ultraschallsignals 3 auch identisch gewählt sein, beispielsweise alle eine Millisekunde betragen.

Ein weniger breitbandiges Ultraschallsignal 3 ist durch einen Frequenzsprung von lediglich 1 kHz zwischen den Signalabschnitten 31 bis 33 des Ultraschallsignals 3 gekennzeichnet. So weist der erste Signalabschnitt 31 des Ultraschallsignals 3 eine zeitliche Dauer von einer Millisekunde auf und eine erste Frequenz von 51 kHz. Der zweite Signalabschnitt 32 des Ultraschallsignals 3 weist eine zeitliche Dauer von einer Millisekunde auf und eine zweite Frequenz von 52 kHz. Der dritte Signalabschnitt 33 des Ultraschallsignals 3 weist eine zeitliche Dauer von einer Millisekunde auf und eine dritte Frequenz von 49 kHz.

In einer weiteren vorteilhaften Signalform des Ultraschallsignals 3 weist das Ultraschallsignal 3 eine sehr breitbandige Charakteristik auf. So weist der erste Signalabschnitt 31 des Ultraschallsignals 3 eine zeitliche Dauer von 0,25 Millisekunden auf und eine erste Frequenz von 52 kHz. Der zweite Signalabschnitt 32 des Ultraschallsignals 3 weist eine zeitliche Dauer von 0,5 Millisekunden auf und eine zweite Frequenz von 56 kHz. Der dritte Signalabschnitt 33 des Ultraschallsignals 3 weist eine zeitliche Dauer von einer Millisekunde auf und eine dritte Frequenz von 48 kHz. Eine solche Signalform ist besonders vorteilhaft, wenn es zu hohen Relativgeschwindigkeiten zwischen dem Objekt und dem ersten Ultraschallsensor 1 kommt. Bei solchen schnellen Annäherungen kann es zu einer starken Frequenzabweichung kommen. Durch das breitbandige Signal wird vermieden, dass reflektierte Signalabschnitte, welche keine Frequenzabweichung aufweisen, ungewollt für reflektierte Signalabschnitte eines anderen Signalabschnittes des Ultraschallsignals 3 gehalten werden, die einer Frequenzabweichung unterlegen sind. Bei der genannten beispielhaften Signalform des Ultraschallsignals 3 erfolgt die Dopplerauswertung, basierend auf dem dritten Signalabschnitt 33 des Ultraschallsignals 3.

Insbesondere wenn eine frühzeitige Auswertung der Frequenzabweichung gewünscht ist, ist es vorteilhaft, wenn die Signalabschnitte 31, 32, 33 des Ultraschallsignals 3 mit der längsten Signaldauer am Anfang des Ultraschallsignals angeordnet sind. So ist ein weiteres beispielhaftes Ultraschallsignal 3 derart gewählt, dass der erste Signalabschnitt 31 des Ultraschallsignals 3 eine zeitliche Dauer von einer Millisekunde aufweist und eine erste Frequenz von 48 kHz aufweist. Der zweite Signalabschnitt 32 des Ultraschallsignals 3 weist eine zeitliche Dauer von 0,5 Millisekunden und eine zweite Frequenz von 54 kHz auf. Der dritte Signalabschnitt 33 des Ultraschallsignals 3 weist eine zeitliche Dauer von 0,16 Millisekunden und eine dritte Frequenz von 42 kHz auf.

Bei zeitgleicher Aussendung von Ultraschallsignalen 3, 7 mittels mehrerer Ultraschallsensoren, beispielsweise dem ersten Ultraschallsensor 1 und dem zweiten Ultraschallsensor 6, ist es vorteilhaft, wenn die Signalform des Ultraschallsignals 3, 7 für jeden der Ultraschallsensoren 1, 6 unterschiedlich gewählt ist. So könnte eine Signalform des Ultraschallsignals 3 für den ersten Ultraschallsensor 1 beispielsweise fünf Signalabschnitte aufweisen, deren Frequenz in zeitlicher Reihenfolge 50 kHz, 51 kHz, 49 kHz, 52 kHz und 48 kHz beträgt. Die Signalabschnitte weisen dabei alle eine zeitliche Dauer von einer Millisekunde auf. Die Frequenz der Signalabschnitte 31, 32, 33 des Ultraschallsignals 3 steigt somit im Wechsel an und fällt wieder ab. Die Signalform des weiteren Ultraschallsignals 7 für den zweiten Ultraschallsensor 6 ist derart gewählt, dass dieser ebenfalls fünf Signalabschnitte aufweist, wobei die Frequenz in zeitlicher Reihenfolge 48 kHz, 52 kHz, 49 kHz, 51 kHz und 50 kHz beträgt, wobei die zeitliche Dauer der einzelnen Signalabschnitte ebenfalls jeweils eine Millisekunde beträgt. Die Frequenz der Signalabschnitte 31, 32, 33 des Ultraschallsignals 3 steigt somit im Wechsel an und fällt wieder ab. Es ergibt sich für jeden der Ultraschallsensoren 1, 6 somit ein Ultraschallsignal, bei dem ein Grad, um den die Frequenz der Signalabschnitte des Ultraschallsignals von Signalabschnitt zu Signalabschnitt abwechselnd ansteigt bzw. absinkt.

Nebst obenstehender Offenbarung wird explizit auf die Offenbarung der Figuren 1 bis 3 verwiesen.

## Patentansprüche

1. Verfahren zum Betreiben eines Ultraschallsystems (10), umfassend:
- Aussenden eines Ultraschallsignals (3), welches mehrere Signalabschnitte (31, 32, 33) umfasst,
wobei ein erster Signalabschnitt (31) des Ultraschallsignals (3) durchgängig eine erste Frequenz (34) aufweist und ein zweiter Signalabschnitt (32) des Ultraschallsignals (3) durchgängig eine zweite Frequenz (35) aufweist,
wobei der erste Signalabschnitt (31) und der zweite Signalabschnitt (32) des Ultraschallsignals (3) in zeitlicher Folge ausgesendet werden und die erste Frequenz (34) ungleich der zweiten Frequenz (35) ist und
wobei der erste Signalabschnitt (31) und der zweite Signalabschnitt (32) des Ultraschallsignals (3) zueinander orthogonale Signale sind;
- Empfangen eines reflektierten Ultraschallsignals (4), und
- Auswerten des reflektierten Ultraschallsignals (4) dahingehend, ob ein reflektierter erster Signalabschnitt vorliegt, der dem ersten Signalabschnitt (31) des Ultraschallsignals (3) zugehörig ist, und ein reflektierter zweiter Signalabschnitt vorliegt, der dem zweiten Signalabschnitt (32) des Ultraschallsignals (3) zugehörig ist.

2. Verfahren gemäß Anspruch 1, ferner umfassend ein Ermitteln einer Frequenzabweichung zwischen dem ersten Signalabschnitt (31) des Ultraschallsignals (3) und dem reflektierten ersten Signalabschnitt und/oder zwischen dem zweiten Signalabschnitt (32) des Ultraschallsignals (3) und dem reflektierten zweiten Signalabschnitt.

3. Verfahren gemäß einem der voranstehenden Ansprüche, **dadurch gekennzeichnet, dass** in unmittelbarer zeitlicher Folge auf das Aussenden des zweiten Signalabschnitts (32) des Ultraschallsignals (3), ein Aussenden eines dritten Signalabschnitts (33) des Ultraschallsignals (3) erfolgt, wobei der dritte Signalabschnitt (33) des Ultraschallsignals (3) kontinuierlich eine dritte Frequenz (36) aufweist, die ungleich der zweiten Frequenz (35) ist und insbesondere ungleich der ersten Frequenz (34) ist.

4. Verfahren gemäß einem der voranstehenden Ansprüche, **dadurch gekennzeichnet, dass** die Frequenz der Signalabschnitte (31, 32, 33) des Ultraschallsignals (3) von Signalabschnitt zu Signalabschnitt ansteigt oder von Signalabschnitt zu Signalabschnitt absinkt.

5. Verfahren gemäß einem der voranstehenden Ansprüche, **dadurch gekennzeichnet, dass** die Frequenz (34, 35, 36) der Signalabschnitte (31, 32, 33) des Ultraschallsignals (3) von Signalabschnitt zu Signalabschnitt mit steigendem oder sinkendem Grad ansteigt oder absinkt und/oder dass die Frequenz (34, 35, 36) der Signalabschnitte (31, 32, 33) des Ultraschallsignals (3) von Signalabschnitt zu Signalabschnitt abwechselnd ansteigt und absinkt.

6. Verfahren gemäß einem der voranstehenden Ansprüche, **dadurch gekennzeichnet, dass** das Empfangen eines reflektierten Ultraschallsignals (4) erfolgt, wenn das Aussenden des Ultraschallsignals (3) abgeschlossen ist.

7. Verfahren gemäß einem der voranstehenden Ansprüche, **dadurch gekennzeichnet, dass** der erste Signalabschnitt (31) und der zweite Signalabschnitt (32) des Ultraschallsignals (3) eine unterschiedliche zeitliche Dauer aufweisen.

8. Verfahren gemäß einem der voranstehenden Ansprüche, **dadurch gekennzeichnet, dass** die zeitliche Dauer der Signalabschnitte (31, 32, 33) des Ultraschallsignals (3) von Signalabschnitt zu Signalabschnitt ansteigt oder abfällt.

9. Verfahren gemäß einem der voranstehenden Ansprüche, **dadurch gekennzeichnet, dass** die Auswertung des reflektierten Ultraschallsignals (4) mittels eines Matched Filters erfolgt.

10. Verfahren gemäß einem der voranstehenden Ansprüche, ferner umfassend:
- Aussenden eines weiteren Ultraschallsignals (7), welches mehrere Signalabschnitte umfasst,
wobei ein erster Signalabschnitt des weiteren Ultraschallsignals (7) durchgängig eine weitere erste Frequenz aufweist und ein weiterer zweiter Signalabschnitt des weiteren Ultraschallsignals (7) durchgängig eine weitere zweite Frequenz aufweist,
wobei der erste Signalabschnitt und der zweite Signalabschnitt des weiteren Ultraschallsignals (7) in unmittelbarer zeitlicher Folge ausgesendet werden und die weitere erste Frequenz ungleich der weiteren zweiten Frequenz ist, w
obei der erste Signalabschnitt und der zweite Signalabschnitt des weiteren Ultraschallsignals (7) zueinander orthogonale Signale sind, und w
obei die weitere erste Frequenz ungleich der ersten Frequenz ist und die weitere zweite Frequenz ungleich der zweiten Frequenz ist; und
- das Auswerten des reflektierten Ultraschallsignals (4) ferner dahingehend erfolgt, ob ein reflektierter weiterer erster Signalabschnitt vorliegt, der dem ersten Signalabschnitt des weiteren Ultraschallsignals (7) zugehörig ist, und ein reflektierter weiterer zweiter Signalabschnitt vorliegt, der dem zweiten Signalabschnitt des weiteren Ultraschallsignals (7) zugehörig ist.

11. Ultraschallsystem, welches dazu eingerichtet ist, das Verfahren gemäß einem der voranstehenden Ansprüche auszuführen.
